# EUROPÄISCHE PATENTSCHRIFT

(11) **EP 0 470 413 B1**
(45) Veröffentlichungstag und Bekanntmachung des Hinweises auf die Patenterteilung: **29.03.1995**
(21) Anmeldenummer: 91112095.4
(22) Anmeldetag: 19.07.1991
(51) Int. Cl.: B60R 19/00

(54) **Sitz für Fahrzeuge**
Vehicle seat
Siège de véhicule

(30) Priorität: 04.08.1990 DE 4024838
(43) Veröffentlichungstag der Anmeldung: 12.02.1992
(73) Patentinhaber: AUDI AG, 85002 Ingolstadt (DE)
(72) Erfinder: Krebs, Bernd, W-8071 Wettstetten (DE); Adickes, Henning, W-8070 Ingolstadt (DE)
(74) Vertreter: Engelhardt, Harald

(56) Entgegenhaltungen:
- DE-A- 3 903 459
- DE-U- 9 001 215
- FR-A- 2 387 143

## Beschreibung

Die Erfindung bezieht sich auf einen Sitz für Fahrzeuge, insbesondere Sitz mit einem an ihm festgelegten Sicherheitsgurt, gemäß dem Oberbegriff des Patentanspruches 1.

Aus der DE-U-9 001 215 ist ein Sitz mit einem Überrollbügel bekannt, welcher durch eine Vorrichtung selbsttätig aus seiner Ruhelage in dem Sitz in seine Wirkstellung bewegbar ist. Dadurch wird bei Fahrzeugen in Cabrio-Bauweise ein wirksamer Schutz für den Sitzbenutzer geschaffen, ohne daß während des normalen Fahrbetriebs das Schutzelement störend in Erscheinung tritt oder einen zusätzlichen Bauraum benötigt. Der Überrollbügel schafft einen zusätzlichen Schutzraum über dem Sitzbenutzer. Gleichzeitig sind in Verbindung mit einer derartigen Anordnung Versuche unternommen worden, für den Sitzbenutzer einen Schutzraum seitlich des Sitzes zu schaffen (interner Stand der Technik).

Ein versenkbarer Überrollbügel, welcher in seiner Ruhelage im Bereich der Hutablage hinter den Fondsitzen untergebracht ist, ist aus der DE-C-3 732 562 bekannt. Bei Vorliegen bestimmter Voraussetzungen wird dieser Überrollbügel selbsttätig um eine Achse aus der Ruhelage in seine Wirkstellung nach oben verschwenkt.

Schließlich zeigt die FR-A-2 387 143 eine Einrichtung zum Schutz bei einem Seitenaufprall, wobei zwischen einem Vordersitz und der Fahrzeugtüre bzw. zwischen den beiden Vordersitzen Sicherheitselemente angeordnet sind, welche einen Schutzraum für die Sitzbenutzer schaffen.

Der Erfindung liegt die Aufgabe zugrunde, einen Sitz für Fahrzeuge so auszubilden, daß ein verbesserter Schutz bei einem seitlichen Überschlag oder bei einem Seitenaufprall gegeben ist, die Schutzeinrichtung jedoch nicht störend in Erscheinung tritt oder viel zusätzlichen Platz benötigt.

Die Aufgabe wird durch die Merkmale des Patentanspruches 1 gelöst.

Durch den sich selbsttätig bei vorgegebenen Bedingungen seitlich aus dem Sitz herausbewegbaren und verriegelbaren Bügel wird die Steifigkeit in Fahrzeugquerrichtung erhöht und der Insasse bei einem Aufprall verbessert vor eindringenden Karosserie- oder Fremdteilen geschützt. Die Verriegelung erfolgt in einem Aufnahmeteil, welches an einem sich seitlich an den Sitz anschließenden Bauteil des Fahrzeuges angeordnet ist. Der verriegelbare Bügel gewährleistet bei einer Aufprallsituation einen seitlichen Schutzraum für den Sitzbenutzer. In der Ausgangslage tritt der Bügel nicht in Erscheinung und benötigt auch keinen zusätzlichen Bauraum, da er im Fahrzeugsitz untergebracht ist.

Die Sicherheitselemente werden im Gefahrenfall durch eine Vorrichtung selbsttätig in ihre Wirkstellung gebracht. Diese Vorrichtung kann beispielsweise durch eine Pyrotechnik oder mechanische Hilfsmittel, wie z. B. einem Seil, gebildet sein. Die Ansteuerung der Vorrichtung erfolgt durch Sensoren, welche an sich bekannt sind und beispielsweise bei unfallbedingten Verzögerungen, bei einem Seitenaufprall oder bei einem Überschlag reagieren.

Besonders vorteilhaft ist, wenn das Sicherheitselement zumindest abschnittsweise als Energiewandler ausgebildet ist, wodurch die Belastungen des Insassen bei einem Aufprall gemindert werden. Für diesen Zweck kann das Sicherheitselement beispielsweise etwa horizontal angeordnete Rohrabschnitte umfassen, welche sich unter Energieumwandlung gezielt verformen. Es ist auch denkbar, sogenannte Pralldämpfer einzusetzen, welche in Verbindung mit Stoßfängern an sich bekannt sind.

Gemäß einer weiteren, besonders vorteilhaften Ausgestaltung der Erfindung, kann das Sicherheitselement mit dem sich seitlich anschließenden Bauteil selbsttätig verriegelbar sein. Dadurch wird die Festigkeit weiter erhöht. Der Sitz bildet dadurch ein die Karosserie zusätzlich versteifendes Element, da mit dem sich seitlich anschließenden Bauteil bei einem Aufprall nicht nur ein Kraftschluß, sondern darüber hinaus auch eine echte Verbindung geschaffen wird, welche Kräfte auch aus anderen Richtungen aufzunehmen vermag. Zum Verriegeln des Sicherheitselements mit dem sich seitlich anschließenden Bauteil des Fahrzeuges können beide Teile beispielsweise so ausgebildet sein, daß sie formschlüssig ineinandergreifen oder eine Rastverbindung erzeugt wird.

Das Sicherheitselement kann in Ruhelage bevorzugt im Sitzunterteil des Sitzes angeordnet sein und in der Wirkstellung bis zum Türschweller des Fahrzeuges reichen bzw. mit ihm verriegeln. Bei dieser Ausgestaltung erstreckt sich das Sicherheitselement (z. B. ein Bügel) etwa in horizontaler Richtung.

Alternativ oder zusätzlich kann das Sicherheitselement in der Ruhelage in der Rückenlehne des Sitzes angeordnet sein und in Wirkstellung bis zu der Mittelsäule des Fahrzeuges reichen bzw. mit der Mittelsäule verriegelt werden.

Besonders vorteilhaft ist eine Ausgestaltung, bei der ein Sicherheitselement in Ruhelage im Sitzunterteil und/oder in der Rücklehne des Sitzes angeordnet ist und in Wirkstellung bis zu den entsprechenden Abschnitten eines neben dem Sitz montierten weiteren Sitzes reicht. Die beiden nebeneinander angeordneten Sitze bilden somit einen steifen Verbund, der bevorzugt dadurch ergänzt ist, daß jeder Sitz zusätzlich noch mit einem Sicherheitselement ausgerüstet ist, welches bis zu dem jeweiligen Türschweller und/oder der zugeordneten Mittelsäule reicht. Durch diese Ausgestaltung wird die Karosserie des Fahrzeuges in optimaler Weise in Fahrzeugquerrichtung versteift. Bei einem Seitenaufprall werden die auftretenden Kräfte nicht nur von dem Karosserieabschnitt auf der jeweiligen Seite aufgenommen, sondern über die Sicherheitselemente und die Sitze auf die andere Seite der Karosserie übertragen, so daß auch diese Abschnitte einen Teil der Belastung aufnehmen können.

Die zur Aufnahme eines oder mehrerer Sicherheitselemente ausgebildeten Sitze weisen eine geeignete Struktur, eine hohe innere Festigkeit und eine entsprechend stabile Bodenanbringung auf. Dies bedeutet gewöhnlich keinen Mehraufwand, wenn es sich bei den Sitzen um solche handelt, bei denen der Sicherheitsgurt unmittelbar am Sitz festgelegt ist. Da die Gurtkräfte über den Sitz in die Bodengruppe des Fahrzeuges geleitet werden müssen, sind derartige Sitze entsprechend verstärkt und deshalb prädestiniert zur Realisierung der vorgeschlagenen Lösung. Solche Sitze sind bereits mehrfach in der Patentliteratur beschrieben und werden bereits in der Praxis verbaut.

Der Gegenstand der vorliegenden Anmeldung läßt sich vorteilhaft auch mit der Ausgestaltung gemäß dem deutschen Gebrauchsmuster DE-U-9 001 215 verbinden. Das bereits eingangs zitierte Gebrauchsmuster hat einen in der Ruhestellung im Sitz untergebrachten Überrollbügel zum Gegenstand. Werden der Überrollbügel und die seitlich ausfahrbaren Sicherheitselemente miteinander kombiniert, dann wird dadurch ein optimaler Schutzraum für die Insassen geschaffen. Im Gegensatz zu an sich bekannten, sogenannten Überrollkäfigen, ist es von Vorteil, daß die Schutzmaßnahmen bei gleicher Wirksamkeit im Normalbetrieb weder optisch stören, noch zusätzlichen Bauraum benötigen, da sie im Sitz untergebracht sind.

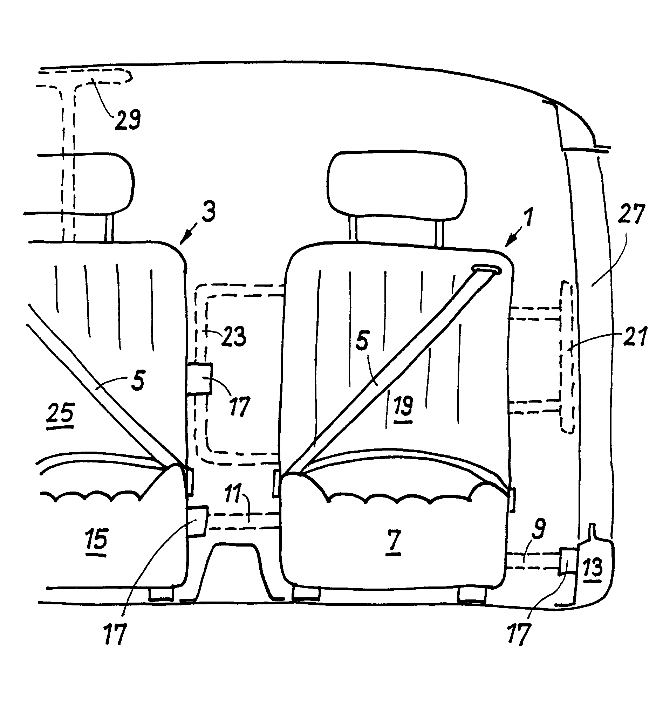

Ein Ausführungsbeispiel der Erfindung ist in der Zeichnung dargestellt und wird nachfolgend näher beschrieben.

Die Zeichnung zeigt in schematischer Darstellung den linken Sitz 1 und den rechten Sitz 3 eines Personenkraftwagens. An jedem Sitz 1 und 3 ist ein Sicherheitsgurt 5 unmittelbar befestigt.

In dem Sitzunterteil 7 des linken Sitzes 1 sind als horizontale Bügel ausgebildete Sicherheitselemente 9 und 11 untergebracht. Im Gefahrenfall werden die Sicherheitselemente 9 und 11 über eine Vorrichtung und gesteuert durch einen Sensor in die gestrichelt dargestellte Position verfahren. Für die Vorrichtung und den Sensor können an sich bekannte Bauteile Verwendung finden, weshalb sie hier nicht näher dargestellt sind.

In der gestrichelt dargestellten Wirkstellung reicht das Sicherheitselement 9 bis zu einem sich an den Sitzunterteil 7 seitlich anschließenden Türschweller 13. Das Sicherheitselement 11 erstreckt sich in gleicher Höhe horizontal bis zu dem Sitzunterteil 15 des rechten Sitzes 3. Sowohl im Türschweller 13, als auch im Sitzunterteil 15 sind geeignete Aufnahmen 17 vorgesehen, in welche die Sicherheitselemente 9 bzw. 11 eintreten und darüber eine nicht näher dargestellte Verriegelung schaffen.

Analog zu den im Sitzunterteil 7 angeordneten Sicherheitselementen 9 und 11 sind in der Rückenlehne 19 des linken Sitzes 1 Sicherheitselemente 21 und 23 untergebracht. Auch hier soll durch die gestrichelte Darstellung angedeutet werden, daß sich die Sicherheitselemente 21 und 23 in Wirkstellung befinden. In der Ruhelage sind alle Sicherheitselemente in dem Sitz 1 untergebracht.

Anders als das Sicherheitselement 23, welches über eine Aufnahme 17 mit der Rückenlehne 25 des rechten Sitzes 3 in Wirkstellung über eine Aufnahme 17 verriegelt ist, reicht das Sicherheitselement 21 nur bis an eine neben dem Sitz 1 angeordneten Mittelsäule 27 heran. Da das Sicherheitselement 21 nicht mit einem angrenzenden Bauteil verriegelt ist, muß es sich selbst arretieren, da es ansonsten keine Kräfte aufnehmen könnte.

Der rechte Sitz 3 ist ebenfalls mit Sicherheitselementen ausgerüstet, welche den Sicherheitselementen 9 und 21 des linken Sitzes 1 entsprechen (nicht dargestellt). Werden im Gefahrenfall alle Sicherheitselemente in die Wirkstellung bewegt, dann wird ein steifer Verbund zwischen den Sitzen und der Karosserie geschaffen, welcher die Festigkeit wesentlich erhöht und einen Überlebensraum für die Insassen schafft.

Schließlich ist in Verbindung mit dem Sitz 3 noch angedeutet, wie durch einen Überrollbügel 29 der angesprochene Überlebensraum weiter vergrößert werden kann. Der Überrollbügel 29, welcher in gleicher oder ähnlicher Ausführung natürlich auch am linken Sitz 1 anzuordnen wäre, ist in Ruhelage ebenfalls in der Rückenlehne 25 angeordnet.

## Patentansprüche

1. Sitz (1) für Fahrzeuge, insbesondere Sitz (1) mit einem an ihm festgelegten Sicherheitsgurt (5), mit einem Sicherheitselement, welches durch eine Vorrichtung selbsttätig von einer Ruheposition im Sitz (1) in eine Wirkstellung bewegbar ist, wobei das Sicherheitselement durch einen herausbewegbaren und in der Wirkstellung arretierbaren Bügel (9, 11, 23) gebildet ist, und wobei Maßnahmen getroffen sind, durch die für den Sitzbenutzer ein Schutzraum seitlich des Sitzes (1) geschaffen wird, **dadurch gekennzeichnet,** daß der Bügel (9, 11, 23) seitlich aus dem Sitz (1) herausbewegbar und in einer Aufnahme (17) verriegelbar ist, welche an einem sich seitlich an den Sitz (1) anschließendem Bauteil des Fahrzeuges angeordnet ist.

2. Sitz nach Anspruch 1, **dadurch gekennzeichnet,** daß der Bügel (9, 11, 23) zumindest abschnittsweise als Energiewandler ausgebildet ist.

3. Sitz nach Anspruch 1 oder 2, **dadurch gekennzeichnet,** daß der Bügel (9, 11, 23) mit dem seitlich anschließenden Bauteil selbsttätig verriegelbar ist.

4. Sitz nach einem der Ansprüche 1 bis 3, **dadurch gekennzeichnet,** daß der Bügel (9) in Ruhelage im Sitzunterteil (7) des Sitzes 1 angeordnet ist und in Wirkstellung bis zum Türschweller (13) des Fahrzeuges reicht.

5. Sitz nach einem der Ansprüche 1 bis 3**, dadurch gekennzeichnet,** daß der Bügel (21) in Ruhelage in der Rückenlehne (19) des Sitzes (1) angeordnet ist und in Wirkstellung bis zu einer Mittelsäule (27) des Fahrzeuges reicht.

6. Sitz nach einem der Ansprüche 1 bis 5, **dadurch gekennzeichnet,** daß ein Bügel (11, 23) in Ruhelage im Sitzunterteil (7) und/oder in der Rückenlehne (19) des Sitzes (1) angeordnet ist und in Wirkstellung bis zu den entsprechenden Abschnitten eines neben dem Sitz (1) montierten weiteren Sitzes (3) reicht.

## Claims

1. Seat (1) for vehicles, more particularly a seat (1) having a safety belt (5) fixed on it, with a safety element which is adapted to be moved automatically by a device into an operative position from a rest position in the seat (1), the safety element being formed by a frame (9, 11, 23) which is adapted to be moved out and locked in the operative position, and measures having been taken to create a protection zone to the side of the seat (1) for the seat user,
characterised in that the frame (9, 11, 23) is adapted to be moved sideways out of the seat (1) and to be interlocked in a locator (17) arranged on a vehicle component laterally adjoining the seat (1).

2. Seat according to claim 1, characterised in that at least certain sections of the frame (9, 11, 23) are in the form of energy converters.

3. Seat according to claim 1 or 2, characterised in that the frame (9, 11, 23) is adapted to be interlocked automatically with the laterally adjoining component.

4. Seat according to any of claims 1 to 3, characterised in that in the rest position the frame (9) is arranged in the lower portion (7) of the seat (1) and in the operative position extends as far as the door sill (13) of the vehicle.

5. Seat according to any of claims 1 to 3, characterised in that in the rest position the frame (21) is arranged in the backrest (19) of the seat (1) and in the operative position extends as far as a centre pillar (27) of the vehicle.

6. Seat according to any of claims 1 to 5, characterised in that in the rest position a frame (11, 23) is arranged in the lower portion (7) of the seat and/or in the backrest (19) of the seat (1) and in the operative position extends as far as the corresponding sections of a further seat (3) fitted alongside the seat (1).

## Revendications

1. Siège (1) pour véhicules, en particulier siège (1) comportant une ceinture de sécurité (5) qui y est fixée, un élément de sécurité qui est mobile automatiquement, sous l'action d'un dispositif, entre une position de repos dans le siège (1) et une position active, l'élément de sécurité étant constitué par un étrier (9, 11, 23) qui peut sortir du siège et être bloqué en position active, des dispositions étant prises par lesquelles il est créé, sur les côtés du siège (1), une zone de protection pour l'occupant du siège, caractérisé en ce que l'étrier (9, 11, 23) peut sortir latéralement du siège (1) et être verrouillé dans un logement (17) qui est disposé sur un élément de la structure du véhicule qui est contigu latéralement au siège (1).

2. Siège selon la revendication 1, caractérisé en ce que l'étrier (9, 11, 23) est réalisé, au moins en partie, sous forme de convertisseur d'énergie.

3. Siège selon la revendication 1 ou 2, caractérisé en ce que l'étrier (9, 11, 23) est verrouillable automatiquement avec l'élément de la structure contigu latéralement.

4. Siège selon l'une quelconque des revendications 1 à 3, caractérisé en ce qu'en position de repos, l'étrier (9) est situé dans la partie inférieure (7) du siège (1) et, en position active, il s'étend jusqu'au seuil de porte (13) du véhicule.

5. Siège selon l'une quelconque des revendications 1 à 3, caractérisé en ce qu'en position de repos, l'étrier (21) est situé dans le dossier (19) du siège (1) et, en position active, il s'étend jusqu'a un montant (27) du milieu du véhicule.

6. Siège selon l'une quelconque des revendications 1 à 5, caractérisé en ce qu'un étrier (11, 23) est situé, en position de repos, dans la partie inférieure (7) et/ou dans le dossier (19) du siège (1) et, en position active, il s'étend jusqu'à la partie correspondante d'un autre siège (3) qui est monté a côté du siège (1) en question.
